# EUROPEAN PATENT APPLICATION

(11) **EP 3 893 181 A1**
(43) Date of publication of application: **13.10.2021**
(21) Application number: 20217821.6
(22) Date of filing: 30.12.2020
(51) Int. Cl.: G06Q 30/00

(54) **METHOD AND SYSTEM FOR MATCHING LOCATION-BASED CONTENT**

(30) Priority: 08.04.2020 US 202063006932 P
(71) Applicant: Framy Inc., Grand Cayman KY1-1208 (KY)
(72) Inventor: LI, Yu-Hsien, 116 Taipei City (TW); LEE, Yun-An, 116 Taipei City (TW); KAN, Nien-Ko, 115 Taipei City (TW)
(74) Representative: Viering, Jentschura & Partner mbB Patent- und Rechtsanwälte

(57) **Abstract**

A method and a system for matching location-based content are provided. The method is operated in a serving system (13). A content setting page is provided for a client to set a matching criterion (at least including a geographic location) to match media contents (502). The serving system (13) queries a database (14) to find one or more media contents (502) that match the matching criterion. Each of the media contents (502) has a score calculated based on various indicators. The scores are provided for the client to select one of the media contents (502). A relationship between the selected media content and a message provided by the client is established, and the message is linked to a POI within a geographic range of the geographic location according to the matching criterion. The message serves as a recommendation of product or service marked at the POI for a user to watch the media content.

## Description

### CROSS-REFERENCE TO RELATED PATENT APPLICATION

This application claims priority from the U.S. Provisional Patent Application Ser. No. 63/006932 filed April 8, 2020, which application is incorporated herein by reference in its entirety.

Some references, which may include patents, patent applications and various publications, may be cited and discussed in the description of this disclosure. The citation and/or discussion of such references is provided merely to clarify the description of the present disclosure and is not an admission that any such reference is "prior art" to the disclosure described herein. All references cited and discussed in this specification are incorporated herein by reference in their entireties and to the same extent as if each reference was individually incorporated by reference.

### FIELD OF THE DISCLOSURE

The disclosure is related to a technology for matching location-based content, and more particularly to a method and a system for matching location-based content in order to recommend a store, a brand, a product or a service to users according to a trader's requirements.

### BACKGROUND OF THE DISCLOSURE

With the conventional technologies, a service provider can collect a user's activities on the Internet through various ways, and the activities are, for example, posts, likes and shares on the social media. The service provider can also collect information searched by the users via browsers, and responses to videos and texts on the Internet. Therefore, the service provider can learn the users' interests by analyzing these activity data. One of the objectives of analyzing the collected data is to provide information that meets the users' interests. For example, the service provider can provide for its clients to advertise products that meet the users' interests. For various commercial channels, the service provider may recommend contents that meet the users' interests.

For business clients, a common marketing method is to make a request to the above-mentioned service provider for advertising product recommendations specifically to target audiences and through channels such as the Internet, television and publication. Using another method, the business clients can pay to create advertising content to be used on specific social media platforms, and also indicate their target audiences. Furthermore, an advertiser can pay Internet influencers (e.g. Internet celebrities) to recommend products or services via their commercial channels.

### SUMMARY OF THE DISCLOSURE

As compared with the conventional technology in which an enterprise client needs to create advertising content by itself and uploads the content to a specific channel, a method for matching location-based content and a system thereof are provided in the disclosure. The method allows the enterprise client to acquire a media content that is popular and meets its requirements by a matching process according to the client's need. Therefore, the enterprise client can use a ready-made media content for recommending a store, a brand, a product or a service. The method allows the enterprise client to effectively save the costs to create the advertising content in the traditional way and also save the time to create an advertising content.

According to one of the embodiments, the system for matching location-based content includes a serving system having a database that stores multiple media contents. The serving system provides a content setting page to be displayed on a client's device. The content setting page is configured to receive a matching criterion set by the client for matching one or more media contents.

The serving system operates a method for matching location-based content. The serving system provides the content setting page for the client to set the matching criterion. The matching criterion at least includes a geographic location. The serving system queries the database to obtain one or more media contents that match the matching criterion. The matching result is provided for the client to select one of the media contents. When selecting one of the media contents, a relationship between the media content and a message provided by the client can be created. Based on the relationship established, the system creates a point of interest within a geographic range for linking the media content that matches the matching criterion.

Further, the matching criterion also includes a media content attribute that is used to match the attribute of the media content in the database. The attribute of the media content can be defined by one or more tags. The media content attribute serving as one of the matching criteria can be set by the client via the content setting page.

Furthermore, each of the media contents in the database is given a score. The score is calculated by the following steps. Firstly, the serving system collects activity data that is generated when users browse the media content. One or more indicators is used to indicate how much a user likes the media content from the activity data collected in each activity. After that, a score for each of the media contents can be calculated according to a weight of each of the indicators. The score is used to evaluate the media content or is used to update an original score of the media content. The indicator can be a number of impressions, a number of likes, a number of shares, watch time of viewing the media content or a number of followers of a channel of the media content, or any combination thereof.

Thus, the serving system can rank one or more digital contents according to the scores given to the one or more media contents that match the matching criterion. The ranked one or more media contents can be displayed on a content setting page and provided for the client to make a selection. The selected media content is then configured to be a point of interest corresponding to the geographic location.

Compared with the score given to each of the media contents in the database, a score threshold is included for screening the one or more media contents whose scores are higher than or equal to the score threshold.

Preferably, when a user operates a browser executed in a user device, a location data is generated. The serving system relies on the location data to determine the geographic range. The one or more media contents within the geographic range can be obtained by querying the database. The media contents include the media contents that relate to the point of interest. A plurality of linking icons corresponding to the media contents are displayed on the browser.

In one preferred aspect of the disclosure, the browser can be an electronic map that forms a background of a graphical user interface. When the user uses the graphical user interface to display a geographic range, the serving system obtains one or more media contents within the geographic range by querying the database.

Further, the message provided by the client is a recommendation message for a recommended store, brand, product or service. The recommendation message can be indicated on the point of interest on the electronic map. The recommendation message is used to recommend the media content for the user to browse. The recommended media content can be, but not limited to, a location-based or personalized media content. The recommendation message can also be shown on a playback page when playing the media content having the recommendation message.

These and other aspects of the present disclosure will become apparent from the following description of the embodiment taken in conjunction with the following drawings and their captions, although variations and modifications therein may be affected without departing from the spirit and scope of the novel concepts of the disclosure.

### BRIEF DESCRIPTION OF THE DRAWINGS

The present disclosure will become more fully understood from the following detailed description and accompanying drawings.
Fig. 1 is a schematic diagram depicting a framework of system for matching location-based content according to one embodiment of the disclosure;
Fig. 2 shows a flow chart describing a process in which a user uses a software program to upload a media content according to one embodiment of the disclosure;
Fig. 3 shows one further flow chart describing a process of using social media activity data to score according to one further embodiment of the disclosure;
Fig. 4 shows another flow chart describing a system providing the location-based media content in another embodiment of the disclosure;
Fig. 5A and Fig. 5B show schematic diagrams depicting the location-based media content browsed by a user in an exemplary example of the disclosure;
Fig. 6 shows a flow chart describing a method for matching location-based content in one embodiment of the disclosure;
Fig. 7 shows another flow chart describing the location-based media content being browsed by a user in another embodiment of the disclosure; and
Fig. 8 is a schematic diagram depicting a browsing image shown as a user uses a browser to view the location-based media content in an exemplary example of the disclosure.

### DETAILED DESCRIPTION OF THE EXEMPLARY EMBODIMENTS

The present disclosure is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a", "an", and "the" includes plural reference, and the meaning of "in" includes "in" and "on". Titles or subtitles can be used herein for the convenience of a reader, which shall have no influence on the scope of the present disclosure.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present disclosure or of any exemplified term. Likewise, the present disclosure is not limited to various embodiments given herein. Numbering terms such as "first", "second" or "third" can be used to describe various components, signals or the like, which are for distinguishing one component/signal from another one only, and are not intended to, nor should be construed to impose any substantive limitations on the components, signals or the like.

The disclosure is related to a method for matching location-based content and a system operating the method. One of the objectives of the method is to provide a ready-made media content that matches matching criteria set up by a client, e.g., an advertiser or an enterprise client. The media content can be a video, a streaming video, an audio, a picture or a text that is provided by a user reporting or recording at a scene of a geographic location (corresponding to a geographic range). The information of geographic location is added when the media content is uploaded to a server. When any media content is found matching the matching criteria, the media content becomes available to the client who can use the media content to achieve a specific purpose. For example, when the media content selected by the client meets its marketing needs, e.g., advertising a store or a product, the serving system establishes a relationship between the product or service provided by the client and the media content, so as to form a link to a point of interest that can be seen by the user when he browses the geographic range. Further, based on the relationship, an advertisement is inserted into the media content when the user randomly browses the geographic range and watches the media content. Both the link and the advertisement achieve the purpose of recommending the related products and services. Further, when the client gains benefits from the matched media content, the user who provides the media content through the system can benefit as well. More specifically, the client can share profits or the benefits of promotion in social media with the user. It should be noted that, it is different from the conventional way that the client should pay an Internet influencer for recommending the products or the services. The system of the disclosure provides an approach that allows the client to choose the matched media content to promote his products and the services.

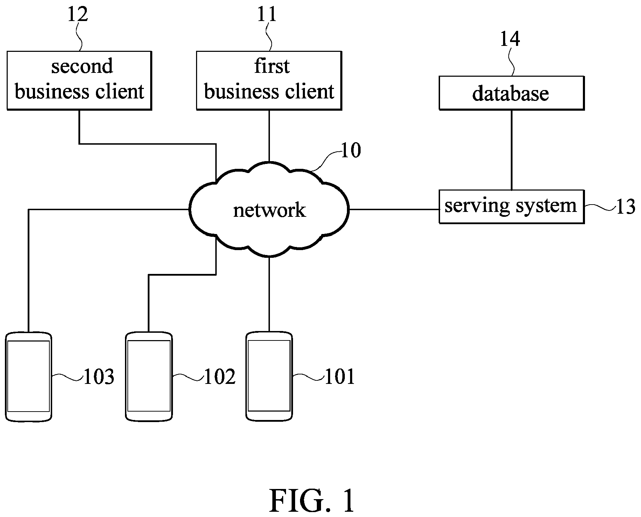

Reference is made to Fig. 1, which is a schematic diagram depicting a framework of the system for matching location-based content according to one embodiment of the disclosure. The system provides a serving system 13 having a database 14. The serving system 13 may adopt one or more servers that are implemented by circuits and software. The database 14 is configured to store media contents.

The serving system 13 provides a variety of services for the users who have various needs via a network 10. In the diagram, user devices 101, 102 and 103 allow multiple users to use a browser to browse the media contents provided by the serving system 13. The serving system 13 provides the media contents within a specific geographic range that is based on the location data generated by the content as browsed by the user. The browser can be any application that is able to process videos, audios and texts. Further, the user can also use the browser to upload a media content that is filmed, recorded and/or produced by the user to the serving system 13.

The serving system 13 serves a first business client 11 and a second business client 12 via the network 10. The business client is the client who has marketing needs for recommending products or services. The serving system 13 provides a content setting page to be displayed on a client's device. The content setting page can be a page initiated by a web browser or a specific application. The content setting page allows the first business client 11 or the second business client 12 to fill in the matching criteria for recommending products or services based on his demand. The matching criteria include, but not limited to, a location. The serving system 13 receives the matching criteria that are referred to for matching one or more media contents via the content setting page.

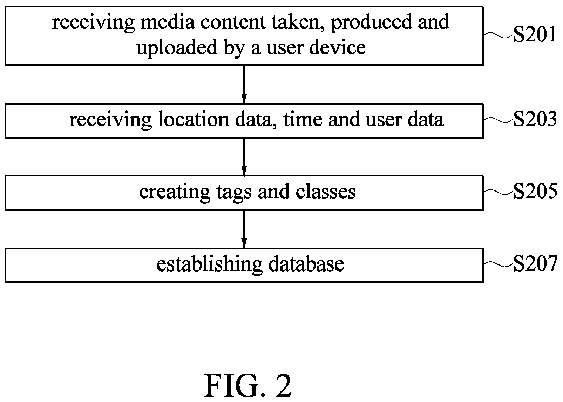

In one embodiment of the disclosure, the serving system 13 operates as a media content server that is configured to collect the media contents that are taken, recorded, produced and uploaded by users at various geographic locations. Reference is made to Fig. 2, which shows a flow chart describing a process for uploading the media content according to the embodiment. A browser or an application is executed in each of the user devices 101, 102 and 103.

In the process, the serving system 13 receives the media contents that are taken, recorded, produced and uploaded by the users via the network 10. The media contents are, for example, the videos, audios, pictures or texts reported or recoded at many geographic ranges (step S201). Files of the media contents record information required by the serving system 13. The serving system 13 can acquire a location data, a timestamp and a user data, i.e., a user ID, corresponding to each of the media contents (step S203). In an aspect, the file of the media content includes a metadata that records essential information relating to the media content. In addition to the user data, the serving system 13 retrieves the location data and the timestamp from the metadata. The serving system 13 relies on these data to create tags and classification of the media contents through a specific software method (step S205).

For example, the information retrieved from the metadata includes, for example, a file size and length, a filming equipment, and a filming date, time and location (i.e., latitude and longitude) of the media content. The information such as the date and the time of taking the media content can be converted to a timestamp. The information of the location where the media content was taken can be converted to a geographic tag. Further, the file size and the length of a video can also be used as tags. When the user uploads the media content, the serving system 13 tags the media content according to options of tags provided by the system or the tags assigned to the media content by the user. The tags can exemplarily be a name of a scenic spot, a name of a restaurant, a name of a building, a name of a person, weather, mood, a color, etc., which can all be referred to as a basis for classification.

Further, the serving system 13 can analyze the media content by a text or image processing technology and then creates the tags assigned to the media content through the analysis. Thus, the database 14 is established when the serving system 13 relies on the information in the attribute and metadata of the media content to create the tag and perform classification via a software method (step S207).

It is worth noting that, in the system for matching location-based content, the media content stored in the database 14 can be matched to serve as an advertisement provided for the business client to recommend his products or services. For this requirement, via various ways, the serving system 13 can obtain the user's agreement to use his media content for matching after the user uploads the media content. For example, after the serving system 13 receives the uploaded media content, an interactive page is provided for the user to confirm whether or not he agrees to have the media content enrolled in matching for location-based content. In one of the embodiments, the system can ask for the user to check (or other ways) to show whether he agrees to the purpose of commercial matching. Thus, when the serving system 13 receives a message of agreement, the serving system 13 then receives the media content uploaded from the user device. The related media content adds a tag for matching that allows the system to classify the media content. The media content with the newly-added tag is stored to the database 14.

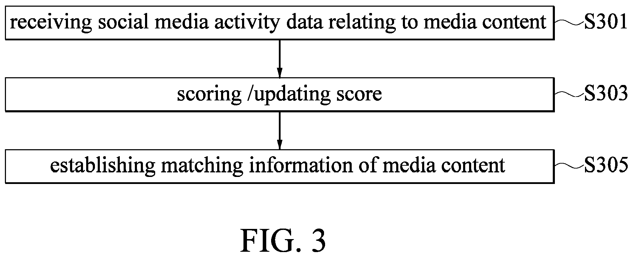

Further, the media content in the database 14 of the serving system 13 is assigned with a score. The score serves as a reference for allowing the serving system 13 to provide a ranking of recommendation. Reference is made to Fig. 3, which shows a flow chart describing a process of using social media activity data of the media content to score the media content in one embodiment of the disclosure.

For calculating the score, the serving system collects the various activity data related to the media contents from multiple users. The activity data is, for example, the social media activity data generated as a user uses a specific application to browse the media content. The activity data renders indicators for evaluating the media content. The indicator indicates how much a user likes the media content from the activity data collected in each activity. For example, the indicator can be a number of impressions, a number of likes, a number of shares, watching time of the media content or a number of followers of a channel of the media content, or any combination thereof. The number of followers of a channel of the media content can be a numer of people that subscribe to a creator's channel. Thus, the serving system can acquire one or more indicators concerning the interest of the media content in every activity data (step S301). Next, the score of the media content can be calculated according to a weight of each of the indicators. The score can be used to evaluate the media content or used to update an original score given to the media content (step S303). Thus, the matching information with respect to each of the media contents can be used to match the matching criterion provided by the client (step S305).

In one of the embodiments of the disclosure, when the media content in the database 14 of the serving system 13 is assigned with a score, the score can still be updated based on the activity data when the content is browsed at any time. The scores of the media contents become one of the criteria for the business client to screen one of the media contents for recommending the products or services.

It should be noted that, with the user's permission, the serving system can collect the activity data of the user on the network. The activity data includes the data of activities of the user in social media, records of searching, the contents followed and browsed by the user, and the timestamps relating to the user's activities. The collected data can be processed by a machine learning algorithm for learning features (in particular, the features of geographic locations) that can be used to form the user's interests. When the user browses contents within a geographic range, the serving system can rely on the learned features and a user's interests to provide a location-based and personalized content. Thus, the serving system is able to recommend the media contents to the user based on the user's interests.

For example, a user arrives at a location and operates a mobile device to use a proprietary browser to report or record a video, an audio, a picture or a text of a scene. The media content can then be uploaded to the serving system. In the serving system, the media content can be analyzed by a software method so as to form the user's interests. The user preference is stored in the database. The serving system collects the user's activity data, such as the content to be browsed, likes, shares and subscriptions, via the software program executed in the user device. The serving system can learn the data features used to describe the user's interestes from the various activity data by the machine learning algorithm.

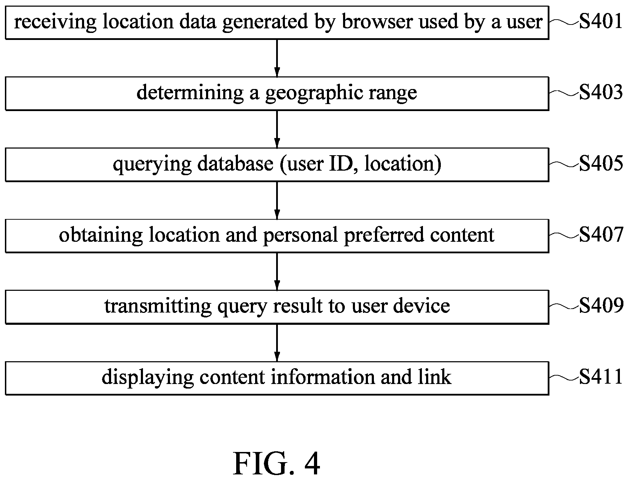

After analyzing the user's activity data, the user's interests can be generated. When considering the scores of the media contents and the user's interests, the serving system can recommend the media contents to the user. Reference is made to Fig. 4, which shows a flow chart describing a process for providing a location-based media content according to one embodiment of the disclosure.

In one embodiment, the user uses the browser executed in the user device to browse the location-based media contents at different geographic locations. In addition to serving as a web browser, the browser executed in the user device can be an electronic map that forms a background of a graphical user interface. The location data is generated when the user uses the browser to browse the contents on Internet (step S401). In an exemplary example, the location data generated at the geographic location can be a set of latitude and longitude of a central point of the geographic range in the electronic map. The location data is then uploaded to the serving system.

Afterwards, the serving system determines the geographic range according to the location data received from the user device (step S403). Next, according to the data received from the user device, the serving system relies on the geographic range and a user ID to query a database (step S405). The media contents that match the user's interests within the geographic range can be obtained (step S407). The query result is then transmitted to the user device (step S409), and related information and links to the related media contents are displayed on the browser (step S411). In one embodiment of the disclosure, the browser executed in the user device displays one or more linking icons of the media contents according to the query result. The linking icons are, for example, the users' pictures, and the preset images or symbols that are marked on the browser.

In one further embodiment of the disclosure, the browser can be a general video or text browser, and the serving system can still determine the geographic locations from the browsed contents. For example, the location data can be obtained from the metadata of the media contents and the location data can be referred to for the system to provide the location-based and personalized contents. In one further embodiment, the browser executed in the mobile device that is operated by the user can collect the location data generated by sensors (such as a GPS sensor) or wireless signals of the mobile device at any time. After the location data is transmitted to the serving system, the serving system can rely on the location data to provide the location-based and personalized media contents to the user.

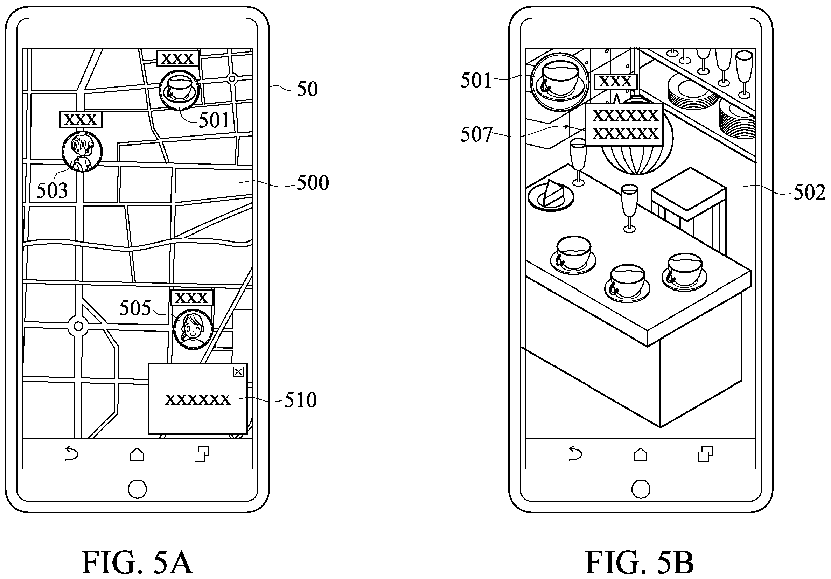

Fig. 5A and Fig. 5B show the schematic diagrams exemplarily depicting the media content browsed by a user.

In Fig. 5A, a browser 50 is manipulated by a user on a mobile device. An electronic map 500 is shown on a graphical user interface of the browser 50. On the browser 50, content-linking icons 501, 503 and 505 are shown and obtained by the serving system querying the database according to the geographic range browsed by the user. Further, a personalized advertisement 510 corresponding to the user's interests may be shown. The content-linking icons 501, 503 and 505 allow the user to select and click on for watching the content. The serving system will repeat the above process shown in Fig. 4 for updating the content-lining icons shown on the browser 50, when the user changes the geographic range on the electronic map 500 by sliding the electronic map 500.

The content-linking icons 501, 503 and 505 shown on the browser 50 link to the location-based media contents obtained by the serving system based on the user's interests. In the meantime, if a plurality of media contents that match the matching criteria (i.e., the geographic range and the user's interests) at the same location are obtained by querying the database in the serving system, the plurality of linking icons with respect to the location-based and personalized media contents are shown on the electronic map 500 with a ranking. The ranking of the media contents is based on the user's interests learned by the serving system, which means that the method allows the serving system to recommend media contents to every user based on his interests with respect to the geographic location since the personalized characteristics at different locations are also different.

As Fig. 5B shows, when the user selects one of the content-linking icons 501, 503 and 505 shown on the browser 50, for example, a media content 502 corresponding to the content-linking icon 501 is played. The media content 502 is especially a location-based and personalized content that matches the geographic range. If the media content 502 is set by the business client as the content used for recommending his products and services, the browser 50 uses a playback page to show a recommendation message 507 once the user selects this media content 502. The content of the recommendation message 507 that serves as an advertisement for recommending the products or services is decided by the business client.

Based on the above-mentioned process of establishing the database and the process of using the browser to browse the location-based media content, the system can obtain the media contents from the database, and also get the user's interests learned by the system in order to match the requirements of the business clients. Therefore, the system can provide appropriate media contents for the business clients to recommend their products or services. When any media content is matched successfully, not only can the popularity of the user who uploads the media content be increased, but the user can also get the profit shared by the business client or others.

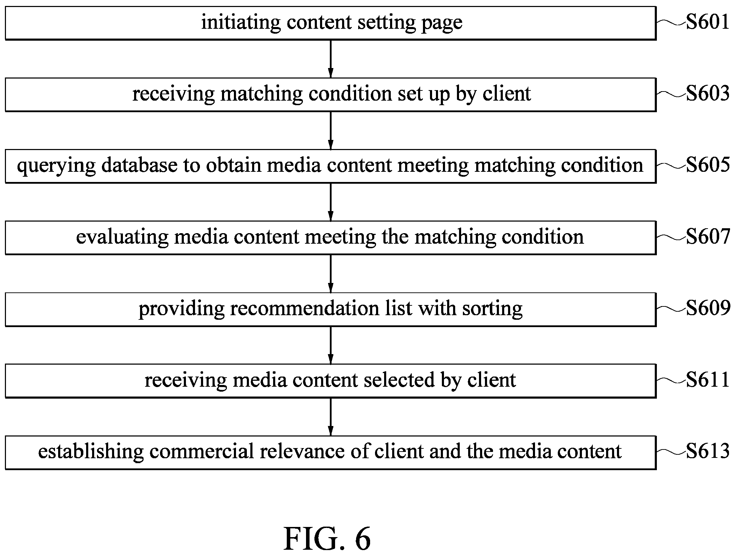

Fig. 6 shows a flow chart describing the method for matching location-based content according to an embodiment of the disclosure.

The method for matching location-based content is operated in a serving system. The serving system provides a content setting page that is initiated in a client device (step S601). Several fields and menus in the content setting page are provided for the client to fill in his requirements that form matching criteria. The serving system then receives the matching criteria from the content setting page (step S603). The matching criterion at least includes a geographic location that is provided for the system to find out the media contents that match the geographic location.

Further, the matching criterion includes a media content attribute that is used to match an attribute of a media content in the database. The attribute of the media content can be created based on the tags shown in the above embodiment. The attribute can be defined by the serving system according to one or more tags that are received from the client via the content setting page.

The matching criterion includes a score threshold that is used to filter one or more media contents that have scores greater than and equal to the score threshold. That is, the client can himself set the score threshold for filtering the media content that he favors. For purpose of advertising, the media content that the business client favors can increase advertising effectiveness.

Afterwards, the serving system relies on the one or more matching criteria to query the database to obtain one or more media contents (step S605). The serving system scores the media content that matches the one or more matching criteria according to the various indicators (step S607) for providing a recommendation list in which the listed media contents are ranked (step S609).

In one embodiment, when multiple media contents match the matching criteria, the serving system ranks the one or more media contents according to their scores. The ranked media contents are then shown on the content setting page. The one or more media contents matching the one or more matching criteria are provided for the client to select. The serving system receives the media content to be selected by the client via the content setting page (step S611). A relationship between the selected media content and a message provided by the client is established. The message can be a paragraph of texts that forms a basis for the system to establish the relationship. When the message is a recommendation message used to recommend products or services, the relationship is a commercial relationship (step S613). When a user uses a browser to browse media contents within a geographic range, a point of interest that is linked to the media content for recommending products or service formed based on the relationship can be marked on the browser, e.g., an electronic map.

In one embodiment of the disclosure, the browser executed in the user device can be a specific software program or a web browser. If the user device is an electronic device with a touch screen, the user can browse the electronic map by hand gestures. If the browser determines that a geographic range is selected by the user's gestures, the browser will generate and send a message about the geographic range to the server system. The serving system also receives the user identification and accordingly queries the database according to the user ID and the geographic range, so as to obtain one or more location-based and personalized media contents within the geographic range. The media contents may also include the point of interest specified as a commercial POI set up by the business client. The business client therefore achieves his marketing purpose through the location-based media content.

In one practical example, the system either allows the business client to select one of the media contents in the database as his advertisement, or allows the business client to have an option to upload his own media content configured to be the advertisement.

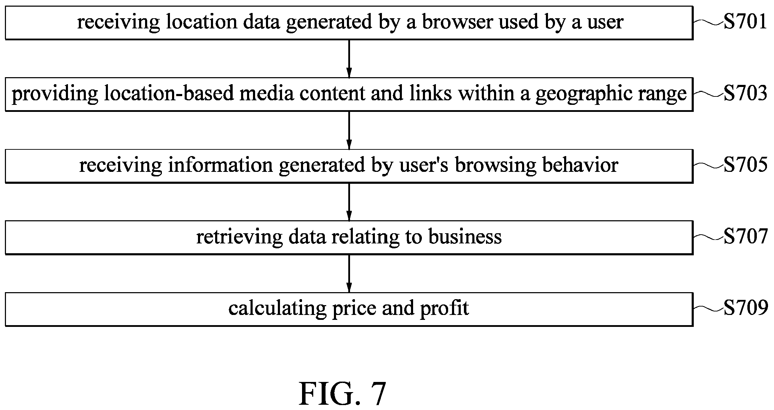

Fig. 7 shows a flow chart describing that a user browses the location-based media content in one embodiment of the disclosure. The serving system can receive the location data as the user manipulates the browser to browse a geographic range (step S701). In the meantime, the serving system queries the database according to the geographic range that is determined according to the location data and a resolution of the device the user uses. A query result shows the links and the location-based media contents within the geographic range (step S703). The media contents may be recommended by the system based on the user's interests and also include the point of interest linked with the media content for recommending the products or services set up by the business client.

After that, the serving system can receive the information generated as the user browses the content (step S705). If a point of interest is selected, the user also obtains the commercial messages (step S707). When the system successfully matches the media content uploaded by a user and makes the media content as one of the points of interest, the business client can therefore be profited by the advertisement. The user who provides the media content can get the social media promotion and affirmation. Further, in the serving system, a price can be calculated according to a profit sharing setting (e.g. an advertisement fee and a calculation method thereof provided by the advertiser), and the profit can be shared with the user (step S709).

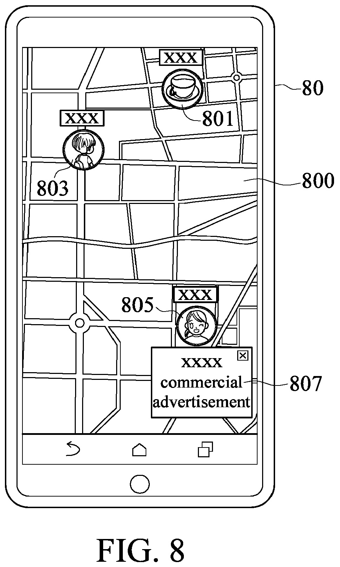

Fig. 8 is a schematic diagram depicting a product-recommendation message shown on a browsing page when the user browses a specific geographic range.

A browser 80 is shown in the diagram. The browser 80 uses an electronic map 800 to be a background interface. A plurality of content-linking icons 801, 803 and 805 corresponding to the location-based media contents are shown on the interface when the serving system queries the database. The content-linking icon 805 is exemplified as a point of interest. A link of a recommendation message 807 that can be represented by an animation, a picture or a text is shown on the interface. The user can view a marketing content and gain a discount. Further information added by the business client can be viewed when the user clicks the recommendation message 807 and plays the media content.

In summation, according to the above embodiments of the method and system for matching location-based content, the method provides an approach that can provide a popular media content that meets a business client's requirements. When matching the media content that meets the business client's requirements, the system can provide the most popular media content at a specific point of interest to the client. Further, the location-based media contents can be ranked by a specific algorithm, and also be scored. The media contents are scored according to the weights assigned to the media contents. The media contents are scored and ranked so as to form a recommendation list that is to be provided for the business client.

In one of the technical effects, when the user uses a software program, e.g., APP or webpage, provided by the system to browse a certain geographic range, the location-based media contents within the geographic range can be shown. Apart from a trader paying to increase ranking of their media contents, the media contents can be shown according to a personalized interests. The factors affecting the media contents to be shown include, for example, geographic locations, times, media content attributes, and a display ranking/advertisement. Thus, the system allows the business client or the advertiser to more efficiently find out advertisements with the location-based and popular media contents and authors thereof. Therefore, through the system, the business client can save costs to produce the advertisement. Furthermore, the approach allows the user to not only have his reputation raised but also share the advertising profit.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its spirit and scope.

## Claims

1. A method for matching location-based content, operated in a serving system (13), comprising:
receiving a matching criterion set by a client via a content setting page provided by the serving system (13), wherein the matching criterion at least includes a geographic location;
querying a database (14) to find one or more media contents (502) that meet the matching criterion;
providing the one or more media contents (502) meeting the matching criterion; and
receiving, in the serving system (13), one of the media contents (502) selected by the client, and establishing a relationship between the selected media content and a message provided by the client, and a link to a point of interest within a geographic range corresponding to the geographic location.

2. The method according to claim 1, wherein the matching criterion further includes a media content attribute that is used to match an attribute of a media content in the database (14), and the serving system (13) defines the media content attribute according to one or more tags that are received via the content setting page; the matching criterion includes a score threshold that is used to filter the one or more media contents (502) that have scores greater than or equal to the score threshold.

3. The method according to claim 2, wherein the serving system (13) ranks one or more media contents (502) according to their scores, the rankings of which are shown on the content setting page, and one of the media contents (502) selected by the client is set as the point of interest.

4. The method according to claim 1, wherein the method for establishing the media content in the database (14) includes:
receiving, by the serving system (13), the media content uploaded from a user device (101, 102, 103);
obtaining a user data, and a location data and a timestamp in a metadata with respect to every media content; and
creating one or more tags according to the attribute and metadata of the media content and classifying the media content so as to establish the database (14).

5. The method according to claim 4 wherein, after the serving system (13) receives the uploaded media content, an interactive page is provided for a user to confirm whether or not the user agrees to have the media content enrolled in matching for location-based content, and if the user agrees, the database (14) stores the media content with a newly-added tag for matching.

6. The method according to claim 4, wherein, in the database (14), each of the media contents (502) has a score that is calculated by steps of:
collecting, by the serving system (13), activity data from multiple users that is generated by browsing the media content;
obtaining one or more indicators indicating how much a user likes the media content from the activity data collected in each activity; and
calculating a score for each media content according to a weight of each indicator, wherein the score is used to evaluate the media content, or used to update an original score of the media content;
wherein the one or more indicators for evaluating the media content are a number of impressions, a number of likes, a number of shares, watch time of the media content or a number of followers of a channel of the media content, or any combination thereof.

7. The method according to any of claims 1 to 6, wherein, a location data is generated when a user operates a browser (50) in a user device (101, 102, 103); wherein the serving system (13) determines the geographic range based on the location data, and when the serving system (13) determines the geographic range by querying the database (14), the serving system (13) obtains one or more media contents (502) linked to the point of interest within the geographic range and/or other one or more media contents (502), and one or more linking icons (501, 503, 505) corresponding thereto are shown on the browser (50).

8. The method according to claim 7, wherein, in addition to the point of interest, the one or more media contents (502) within the geographic range and the media contents (502) related to the user's interests are obtained by querying the database (14); the browser (50) is a graphical user interface that uses an electronic map (500) as a background, and the serving system (13) queries the database (14) based on the geographic range to obtain the one or more media contents (502) when the user uses the graphical user interface to display the geographic range.

9. The method according to claim 8, wherein the client provides a message as a recommendation message (507) for recommending a store, a brand, a product or a service, and the point of interest marked on the electronic map (500) is used to recommend the user to view media contents (502) related to the geographic range; when the user chooses one of the media contents (502) on the electronic map (500) linked to the recommendation message (507), the recommendation message (507) is displayed on a playback page.

10. A system for matching location-based content, comprising:
a serving system (13), including a database (14), which stores multiple media contents (502), wherein the serving system (13) provides a content setting page displayed on a client device to receive a matching criterion set by a client for matching one or more media contents (502);
wherein the serving system (13) operates a method for matching location-based content comprising:
receiving the matching criterion set by the client via the content setting page provided by the serving system (13), wherein the matching criterion at least includes a geographic location;
querying the database (14) to find one or more media contents (502) that meets the matching criterion;
providing the one or more media contents (502) meeting the matching criterion; and
receiving, in the serving system (13), one of the media contents (502) selected by the client, and establishing a relationship between the selected media content and a message provided by the client, and a link to a point of interest within a geographic range corresponding to the geographic location.

11. The system according to claim 10, wherein the matching criterion further includes a media content attribute that is used to match an attribute of a media content in the database (14), and the serving system (13) defines the media content attribute according to one or more tags that are received via the content setting page; the serving system (13) ranks one or more media contents (502) according to their scores, the rankings of which are shown on the content setting page, and one of the media contents (502) selected by the client is set as the point of interest.

12. The system according to claim 11, wherein the method for establishing the media content in the database (14) includes:
receiving, by the serving system (13), the media content uploaded from a user device (101, 102, 103);
obtaining a user data, and a location data and a timestamp in a metadata with respect to every media content; and
creating one or more tags according to the attribute and metadata of the media content and classifying the media content so as to establish the database (14);
wherein the media content in the database is a video, an audio, a picture or a text that is produced by the user reporting or recording at a scene within the geographic range; after the serving system (13) receives the uploaded media content (502), an interactive page is provided for a user to confirm whether or not the user agrees to have the media content (502) enrolled in matching for location-based content, and if the user agrees, the database (14) stores the media content with a newly-added tag for matching.

13. The system according to claim 12, wherein, in the database (14), a score is given to each of the media contents (502), and the score is calculated by steps of:
collecting, by the serving system (13), activity data from multiple users that is generated by a plurality of users browsing the media content;
obtaining one or more indicators indicating how much a user likes the media content from the activity data collected in each activity; and
calculating a score for each of the media contents (502) according to a weight of each of the indicators, wherein the score is used to evaluate the media content, or used to update an original score of the media content.

14. The system according to any of claims 10 to 13, wherein, a location data is generated when a user operates a browser (50) in a user device (101, 102, 103); wherein the serving system (13) determines the geographic range corresponding to the location data, and when the serving system (13) determines the geographic range by querying the database (14), the serving system (13) obtains one or more media contents (502) linked to the point of interest within the geographic range and/or other one or more media contents (502), and one or more linking icons (501, 503, 505) corresponding thereto are shown on the browser (50); the browser (50) is a graphical user interface that uses an electronic map (500) as a background, and the serving system (13) queries the database (14) based on the geographic range to obtain the one or more media contents (502) when the user uses the graphical user interface to display the geographic range.

15. The system according to claim 14, wherein the client provides a message as a recommendation message (507) for recommending a store, a brand, a product or a service, and the point of interest marked on the electronic map (500) is used to recommend the user to view the media contents (502) related to the geographic range; when the user chooses one of the media contents (502) on the electronic map (500) according to the recommendation message (507), the recommendation message (507) is displayed on a playback page.
